# EUROPEAN PATENT SPECIFICATION

(11) **EP 0 780 266 B1**
(45) Date of publication and mention of the grant of the patent: **12.04.2000**
(21) Application number: 96120506.9
(22) Date of filing: 19.12.1996
(51) Int. Cl.: B60R 1/06

(54) **Door mirror with a small dead angle**
Türspiegel mit einem kleinen toten Winkel
Rétroviseur de portière avec un petit angle mort

(30) Priority: 22.12.1995 JP 35052195
(43) Date of publication of application: 25.06.1997
(73) Proprietor: Kuramoto, Atsushi, Yamagata-Gun, Hiroshima-ken (JP)
(72) Inventor: Kuramoto, Atsushi, Yamagata-Gun, Hiroshima-ken (JP)
(74) Representative: Fiener, Josef

(56) References cited:
- WO-A-91/19626
- DE-A- 3 211 478
- DE-A- 4 342 168
- FR-A- 2 579 149
- FR-A- 2 655 298
- GB-A- 1 177 752
- GB-A- 2 261 201
- US-A- 4 558 930
- US-A- 5 008 603
- PATENT ABSTRACTS OF JAPAN vol. 11, no. 14 (M-553), 14 January 1987 & JP 61 188242 A (NISSAN), 21 August 1986,
- PATENT ABSTRACTS OF JAPAN vol. 15, no. 225 (M-1122), 10 June 1991 & JP 03 067735 A (OMRON), 22 March 1991,

## Description

### Technical Field

The present invention relates to a door mirror with a small dead angle. More specifically, the invention relates to a door mirror with a small dead angle which makes it possible to easily see the areas where the right and left front and rear wheels are touching the ground that could not been seen so far with the conventional door mirrors, and to easily see the horizontal forward direction on the side of the assistant driver's seat at the time of passing another car ahead by manipulating buttons at the driver's seat.

### Background Art

A variety of contrivances have heretofore been proposed to decrease dead angles of a door mirror from the standpoint of safety.

Japanese Unexamined Patent Publication No. 116568/1993 discloses a device for changing the visual field of a rearview mirror by turning at least one of either the right door mirror or the left door mirror by a required angle in a direction in which the dead angle will be eliminated based upon a control signal output from a control means in response to at least either an on-signal or an off-signal from a turn signal lamp switch of a car (or in response to an on-signal from a reverse gear detection switch).

According to this proposal, the mirror automatically returns back to the original position after the use. However, the door mirror is not allowed to swivel which is not capable of coping with a change in the position of the eyes when the car is driven by a different driver. Besides, when traveling forward, the movement of the mirror is triggered by the on-signal of the turn signal lamp switch; i.e., the areas of dead angles come into a visual field after the turn signal is output. When driving into a running lane from a ramp on an express way or when changing the lane in an ordinary manner, therefore, the turn signal is flashed first without seeing the rearview inviting a danger in that the car may be struck from behind by a succeeding car. Besides, it could happened that the distances to the succeeding cars were incorrectly recognized since the visual field obtained in this state was different from the visual field obtained at an ordinary position.

Japanese Unexamined Patent Publication No. 191349/1994 proposes a rearview mirror that eliminates dead angles, according to which when it is attempted to enter into, or come out from, a garage or a parking area, the visual field near the rear wheels is maintained by moving mirrors that are remotely controlled by electricity, hydraulic pressure or pneumatic pressure. According to this proposal, however, the moving mirrors move by only a small amount. Moreover, in the case of a car with a right-side steering wheel, it is impossible to watch the front left wheel from the driver's seat. Besides, fine adjustment is not accomplished, either, to comply with the position of the driver's eyes.

In U.K. and Japan, the cars keep to the left and have a steering wheel on the right side of the car. However, though not all of them, many imported cars manufactured in foreign countries still have a steering wheel on the left side. When used in Japan, the cars with a left-sided steering wheel have a demerit in that difficulty is involved in passing another car ahead particularly in a facing traffic lane. If the right-side mirror could be automatically controlled to a preset position where it faces forwards in a horizontal direction and if the horizontal forward view could be seen, then, it is allowed to easily confirm the presence of the oncoming cars without risking to move into the right lane to an excess degree. It is then made possible for a driver of a car with the left-sided steering wheel to safely pass the car ahead. With the conventional simply constructed remotely-controlled door mirror, however, a lot of time was needed for adjusting the position, and the door mirror could not be quickly moved to an angle for seeing the horizontal forward view in a "one-touch" operation and could not be quickly returned back to the initial position, either. It needs not be pointed out that the same holds true even for the cars with the right-sided steering wheel when they are used in countries where the traffic rule is that keep to the right when you drive.

In an attempt to provide a wide-view door mirror that is very useful in handling the cars in garages and parking areas, and in moving the cars back and forth on very narrow roads, the present inventors have forwarded keen study and have arrived at the present invention as a result of making such contrivances as sliding the door mirror itself along a support arm that extends in the direction of width of the car and digitally setting the directions in advance.

GB 2 261 201 A discloses a door mirror for road vehicles according to the preamble of claim 1 that enables the driver of a vehicle to gain a forward-view of the opposite side of the road when driving behind another vehicle, when sitting in the vehicle at the side remote from the middle of the road as, for example, in a right-hand-drive vehicle in a right hand traffic, comprises a mirror in a frame connected to a body by a swivel joint and detachably secured to a window with a clip and a foot. An overtaking mirror according to another embodiment is intended for installation into vehicles as original equipment and can save either as rearview or as forward-view mirror. A housing that fully encloses the rear of the mirror is mounted at the vehicle via a two-part door-sleeve.

### Disclosure of the Invention

The object of the present invention is to provide a door mirror with a small dead angle, according to which the mirror surface of the door mirror on one side or on both sides is automatically moved to an angular position that is set in advance when an indoor switch is operated by a driver at any time, so that the field which is usually within dead angles comes into a visual field temporarily, and then the mirror surface automatically returns back.

Another object of the present invention is to provide a door mirror with a small dead angle which makes it easier for the drivers of the cars with the left-sided steering wheel (many of the imported cars are of this type) used in Japan or U.K. to pass another car ahead.

A further object of the present invention is to provide a door mirror with a small dead angle which enables the position and angle of the mirror surface to be adjusted finely and easily depending upon a change in the positions of the eyes when the car is used by a different driver.

A still further object of the present invention is to provide a door mirror with a small dead angle which is held within the amount of protrusion beyond the car body of a conventional door mirror, and which can be expanded as required and can be stored.

Yet further object of the present invention is to provide a door mirror with a small dead angle that is capable of covering otherwise dead-angled visual fields, offering dazzle-proof view to the driver and having movable sources of light that move together with the mirror surface.

The object is solved by a door mirror according to claim 1. Preferred embodiments are subject matter of dependent claims 2 to 7.

### Brief Description of the Drawings

Fig. 1 is a perspective view of a left-side door mirror of a car with the right-sided steering wheel enabling the front left wheel to be seen according to an embodiment;
Fig. 2 is a perspective view of the left-side door mirror in an intermediate attitude (moving) to enable the front left wheel to be seen according to the embodiment;
Fig. 3 is a perspective view of the left-side door mirror in an intermediate attitude (moving) in which a mirror case 10 has moved in a horizontal direction only according to the embodiment;
Fig. 4 is a perspective view of the left-side door mirror in a standard state (during the ordinary driving condition) set by a driver according to the embodiment;
Fig. 5 is a sectional view illustrating part of the embodiment that corresponds to Fig. 1;
Fig. 6 is a sectional view illustrating part of the left-side door mirror according to the embodiment that corresponds to Fig. 2;
Fig. 7 is a sectional view illustrating part of the embodiment that corresponds to Fig. 3;
Fig. 8 is a sectional view illustrating part of the embodiment that corresponds to Fig. 4;
Fig. 9 is a perspective view of a mirror controller;
Fig. 10 is a wiring diagram of a mirror control system;
Fig. 11 is a block diagram of the mirror control system; and
Fig. 12 is a perspective view illustrating a state where the front left wheel 20 is seen by an eye E of a driver.

### Description of Embodiment

The present invention will now be described in detail by way of an embodiment.

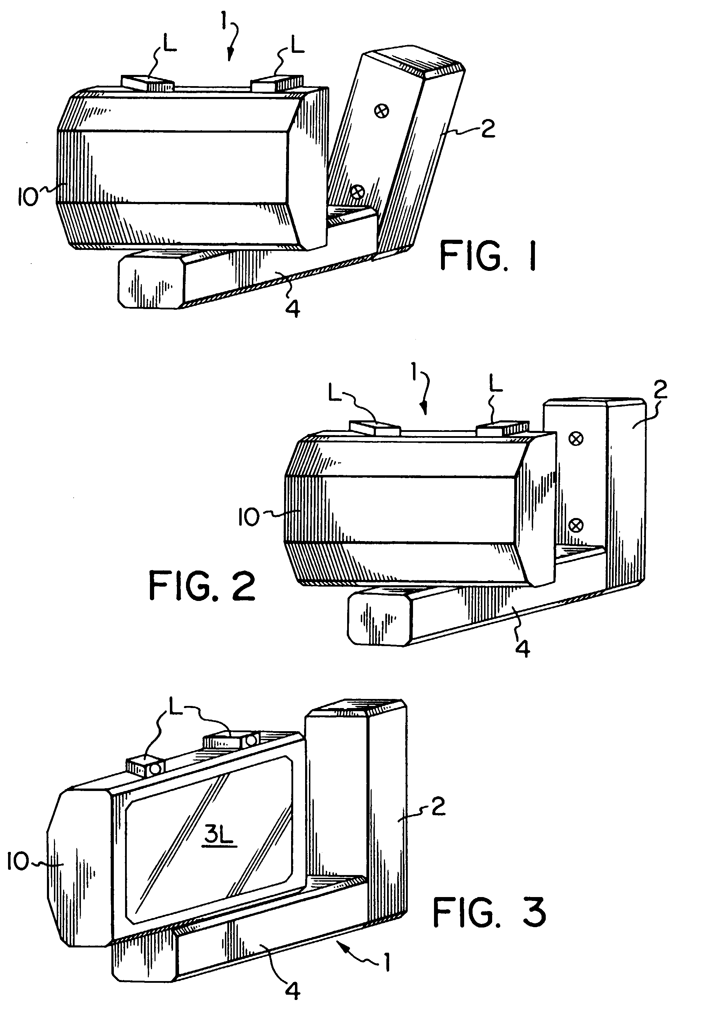

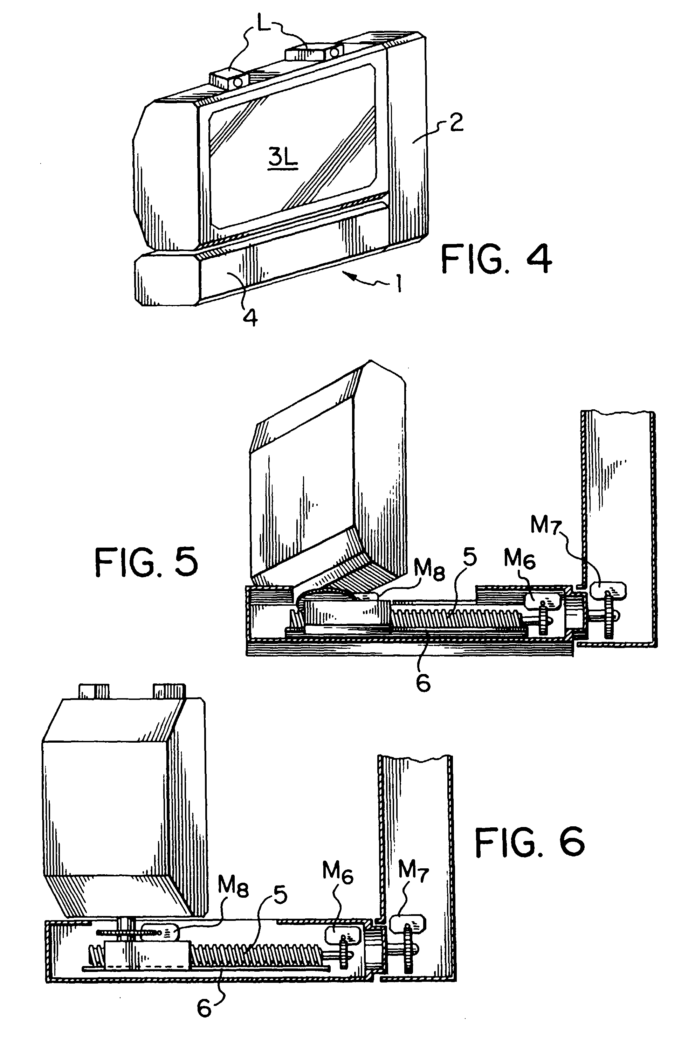

Referring to Figs. 1 to 8, reference numeral 1 denotes a door mirror with a small dead angle according to an embodiment of the present invention, 2 denotes a base plate, 3 denotes a mirror surface, 4 denotes a support arm, 5 denotes a straight-moving screw, 6 denotes a guide, 8 denotes a slide plate, 10 denotes a mirror case, and symbol L denotes movable sources of light. In the following description, reference numerals may take subscripts like 1L, 3L to represent those related to the door mirror of the left side, and 1R, 3R to represent those related to the door mirror of the right side.

The door mirror 1 according to this embodiment is basically constituted by a plastic or metallic hollow base plate 2 secured by bolts or the like to a front end portion of a front door of a car, a support arm 4 which extends nearly in the direction of width of the car body from the base plate 2 and is pivotally attached to rotate nearly in the forwardly and reversely rotating directions of the wheel, and a mirror case 10 which is pivotally attached to nearly the central upper portion of the support arm 4 to rotate nearly in the directions in which the front wheels are directed and is equipped with nighttime illumination lamps L, L.

The mirror case 10 is equipped with a widely known device for finely adjusting the angle of the mirror surface. A pair of movable sources of light (nighttime illumination lamps) L, L are mounted on the upper portions of the mirror case in a nonparallel manner to be widened in a direction opposite to the mirror surface. Either one of these nighttime illumination lamps L, L is turned on, that does not directly project light to the eyes of the driver when small lamps (parking lamps) or head lamps are turned on and, besides, when another special switch is turned on. They are not turned on at the time of confirming the oncoming cars (when the mirror case is directed to a forward horizontal direction) when the driver is attempting to pass another car ahead. Therefore, the drivers of the oncoming cars are not dazzled.

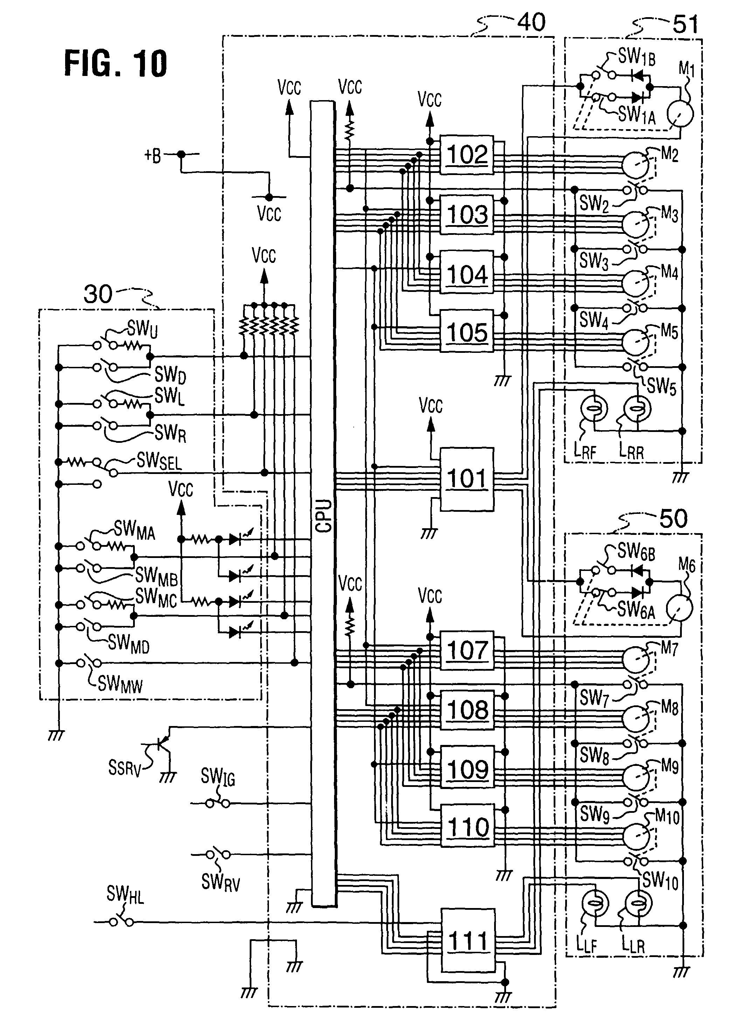

Fig. 10 is a wiring diagram of a mirror control system which is roughly constituted by a mirror control unit 40, drive units 50, 51 inside the right and left mirrors, and a mirror controller 30.

The mirror control unit 40 is constituted by a CPU (microprocessor), motor drive circuits 101, 102, 103, 104, 105, 107, 108, 109, 110, and a lamp turn-on circuit 111. The CPU sends drive signals related to turning the switches on and off to the motor drive circuits 101 to 110, and stores the rotational angles of the motors. Upon receiving signals from the CPU, the motor drive circuits 101 to 110 feeds drive voltages to the motors M₁ to M₁₀ of the drive units 50 and 51 in the right and left mirrors. Upon receiving a turn-on signal from the CPU and being served with the electric power through a light switch SW_{HL}, the lamp turn-on circuit 111 supplies a turn-on voltage to the nighttime illumination lamps of the drive units 50 and 51 in the right and left mirrors.

The drive unit 50 in the left mirror includes a straight-moving screw motor M₆, a storing position limit switch SW_{6A} and an expanded position limit switch SW_{6B} for halting the straight-moving screw motor M₆ at a predetermined position, an α-axis motor M₇ and a β-axis motor M₈ for turning the mirror case, a γ-axis motor M₉ and a δ-axis motor M₁₀ for finely adjusting the mirror surface, limit switches SW₇, SW₈, SW₉ and SW₁₀ for detecting points that serve as references for controlling the α-axis, β-axis, γ-axis and δ-axis, and nighttime illumination lamps L_{LF} and L_{LR}. The straight-moving screw motor M₆ is a DC motor, and other motors M₇, M₈, M₉ and M₁₀ are step motors. Like the drive unit 50 in the left mirror, the drive unit 51 in the right mirror includes a straight-moving screw motor M₁, expanded position and storing position limit switches SW_{1A} and SW_{1B}, motors M₂, M₃, M₄ and M₅ of the α-axis, β-axis, γ-axis and δ-axis, limit switches SW₂, SW₃, SW₄ and SW₅, and nighttime illumination lamps L_{RF} and L_{RR}.

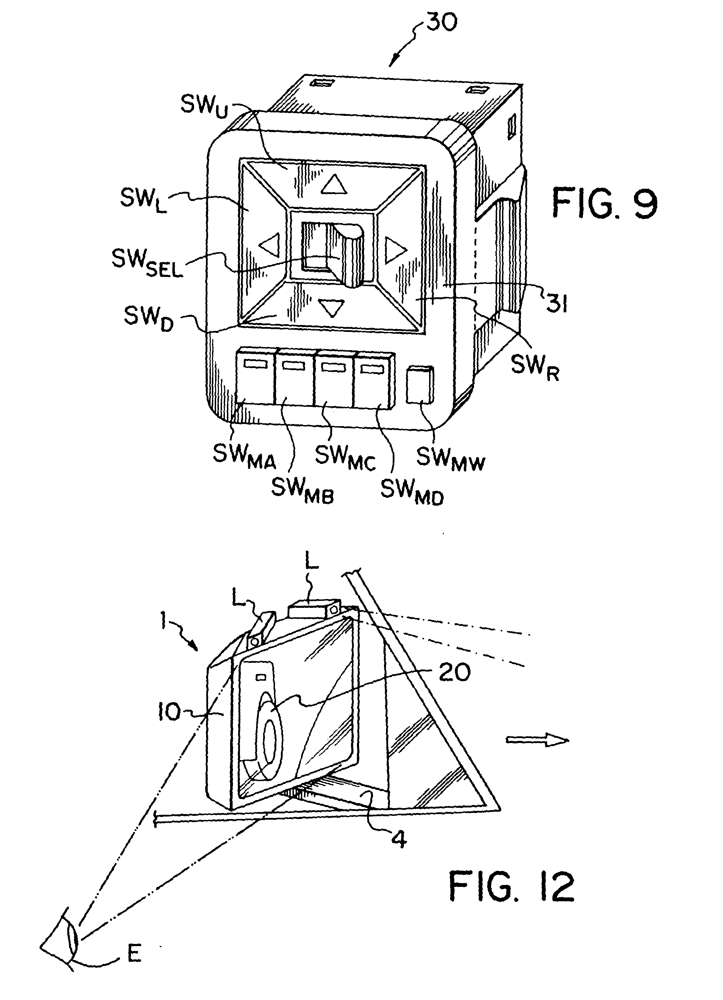

Fig. 9 shows the appearance of the mirror controller 30, wherein a front panel 31 includes longitudinal and transverse fine adjustment switches SW_{U}, SW_{D}, SW_{L} and SW_{R}, a right-and-left change-over switch SW_{SEL}, memory operation switches SW_{MA}, SW_{MB}, SW_{MC}, SW_{MD} and SW_{MW}, and an indicator LED. The longitudinal and transverse fine adjustment switches SW_{U} and SW_{D} are used to control the angle of γ-axis of the mirror surfaces 3L and 3R and to control the angle of the α-axis of the support arms 4L and 4R, the longitudinal and transverse fine adjustment switches SW_{L} and SW_{R} are used to control the angle of the δ-axis of the mirror surfaces 3L and 3R and to control the angle of the β-axis of the mirror cases 10L and 10R, and the right-and-left change-over switch SW_{SEL} transmits to the CPU which one of the drive units in the right and left mirrors be selected to be controlled. The memory operation switches are used to store in the CPU the state of the drive units in the right and left mirrors, and to reproduce from the CPU the state of the drive units of the right and left mirrors.

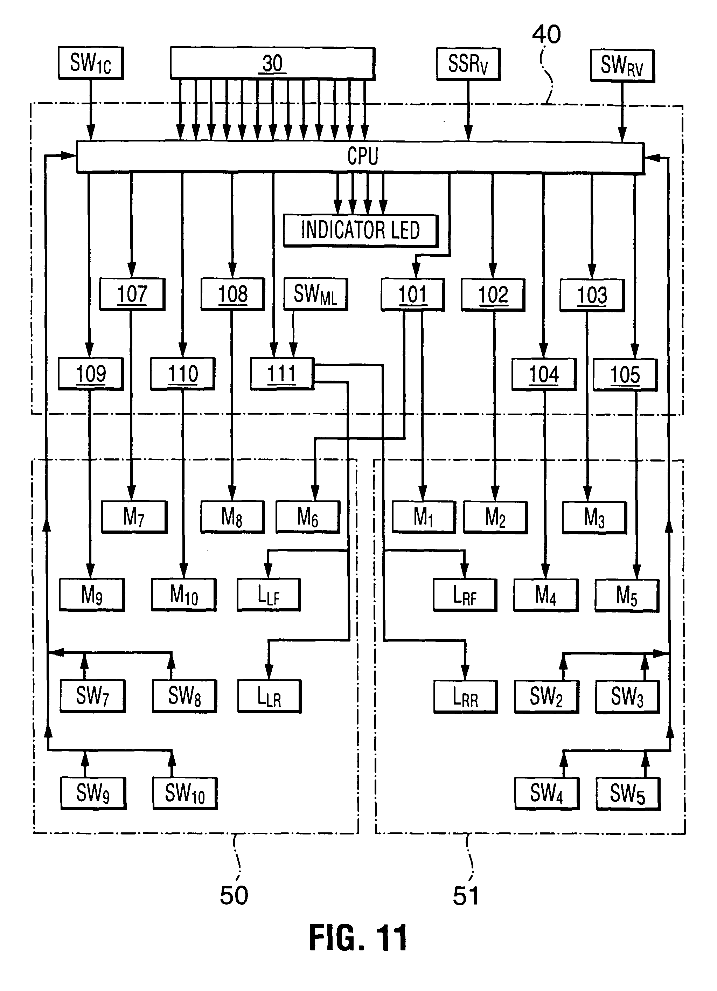

Fig. 11 is a block diagram illustrating a relationship of control in the mirror control system.

The operation of this embodiment will now be described with reference to Fig. 10.

### [1]Operation of the mirror in an ordinary driving condition.

When the up-and-down direction adjustment switches SW_{U} and SW_{D} and the right-and-left direction adjustment switches SW_{R} and SW_{L} of the mirror controller 30 are depressed while the IG key switch SW_{IG} is being closed, the CPU causes, through the drive circuits 104, 109, 105 and 110, the γ-axis motor M₄ or M₉ and the δ-axis motor M₅ or M₁₀ to be rotated in the directions in which the adjustment switches are depressed in the mirror of either side selected by the right-and-left change-over switch SW_{SEL}. The CPU converts the rotational angles (deviations from the origins) of the motors of when they are no longer driven into pulse counts and stores them as return positions set by the driver. The origins are those positions where the limit switches SW₂, SW₃, SW₄, SW₅, SW₇, SW₈, SW₉, and SW₁₀ are closed.

### [2] Setting the mirror position again.

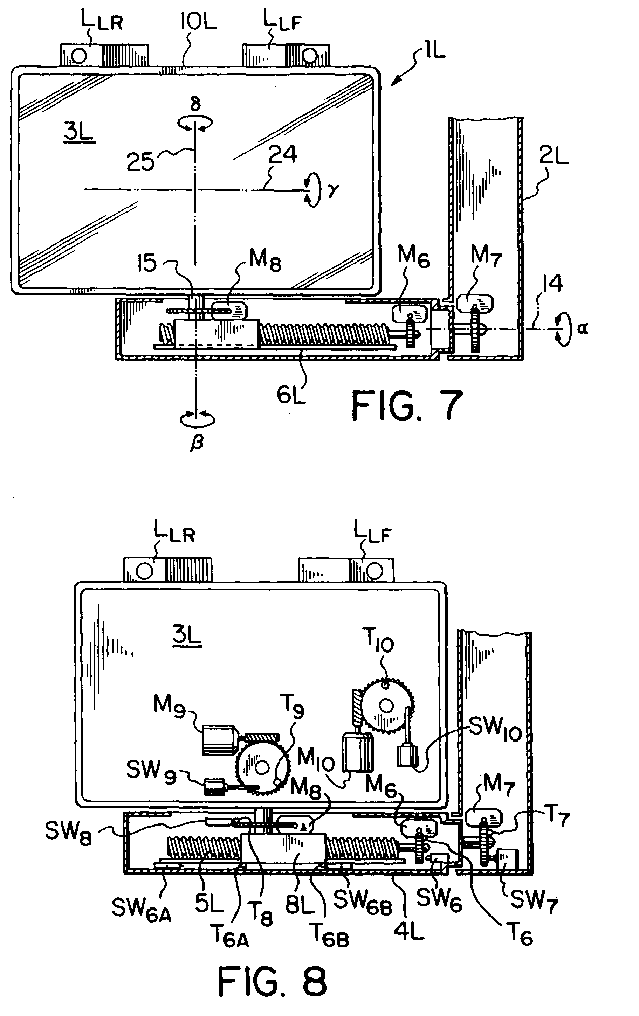

(1) When the IG key switch SW_{IG} is closed from the open state, the CPU drives, through the straight-moving screw drive circuit 101, the right mirror straight-moving screw motor M₆ toward the returning direction for a predetermined period of time (e.g., five seconds). The slide plates 8L and 8R (see Fig. 8) move accompanying the turn of the straight-moving screw and come into a halt at a return position where the return position limit switches SW_{1A} and SW_{6A} are opened. Here, however, when the switches SW_{1A} and SW_{6A} have been opened at a moment when the IG key switch SW_{IG} is closed, the slide plates 8L and 8R do not move, as a matter of course.
(2) As the IG key switch SW_{IG} is closed, the CPU causes, through the drive circuit 107, the step motor M₇ that drives the α-axis of the left mirror to rotate in a direction in which a protrusion T₇ (see Fig. 8) for detecting the position approaches the limit switch SW₇. Upon detecting the closure of the switch SW₇, the CPU causes, through the drive circuit 107, the motor M₇ to rotate up to a rotational angle that has been stored as a return position in the form of a pulse count, so that the direction of the α-axis of the left mirror returns back to the return position set by the driver. Likewise, the β-axis (M₈, 108, T₈, SW₈), γ-axis (M₉, 109, T₉, SW₉) and δ-axis (M₁₀, 110, T₁₀, SW₁₀) of the left mirror and the α-axis (M₂, 102, T₂, SW₂), β-axis (M₃, 103, T₃, SW₃), γ-axis (M₄, 104, T₄, SW₄) and δ-axis (M₅, 105, T₅, SW₅) of the right mirror return to the initial positions set by the driver.

### [3] Operation of the mirror in a state of expanded visual field.

(1) The switches SW_{U}, SW_{D}, SW_{R}, and SW_{L} of the mirror controller 30 may be depressed in excess of the rotational ranges (ranges for finely adjusting the mirror surface in the mirror case) of the γ-axis 24 and the δ-axis 25 (see Fig. 7) that have been set in the CPU in advance as pulse counts in a state where the right-and-left change-over switch SW_{SEL} has been closed toward the side of the left mirror. Then, the CPU causes, through the straight-moving screw drive circuit 101, the straight-moving screw motor M₅ to be driven toward the expanding direction for a predetermined period of time (e.g., five seconds) and further causes, through the drive circuits 109 and 110, the γ-axis motor M₉ and the δ-axis motor M₁₀ to be rotated up to the center of the range of rotation. Expansion stands for moving the mirror case up to the extreme outer end of the support arm 4 (see Fig. 8) in order to establish the state without dead angle. The straight-moving screw motor M₆ comes into a halt as the circuit is opened by the operation of the expansion position limit switch SW_{6B} (transfer to the state of an expanded visual field).
   Thereafter, as the up-and-down direction adjustment switches SW_{U}, SW_{D} and the right-and-left direction adjustment switches SW_{R}, SW_{L} of the mirror controller 30 are depressed, the CPU causes, through the drive circuits 109 and 110, the corresponding γ-axis motor M₉ and the δ-axis motor M₁₀ to rotate in the directions in which the buttons are depressed. Here, when the buttons are operated in excess of the above-mentioned range of rotation, the CPU causes, through the drive circuits 107 and 108, the α-axis motor M₇ and the β-axis motor M₈ in the mirror case to be rotated in the directions in which the adjustment switches are depressed for a period of time in which they are kept depressed. It is thus made possible to see any objects that are desired to be seen (e.g., area where the front left wheel is touching the ground) from the driver's seat. In this case, the γ-axis motor M₉ and the δ-axis motor M₁₀ are rotated through the drive circuits 109 and 110 up to the center of the range of rotation, so that the mirror surface can be easily operated next time. The CPU further sends to the turn-on circuit 111 a lamp turn-on signal to illuminate the area to where the mirror surface is faced in comparison with the angle of gaze of the driver that has been set in the CPU as a pulse count. When the light switch SW_{HL} is closed (during the night), the electric power is supplied to the circuit 111 and, hence, either the nighttime illumination lamp L_{LF} or L_{LR} of the corresponding direction is turned on. In the foregoing was described the operation of the door mirror of the left side.
   Next, when the switch SW_{SEL} is closed to the side of the right mirror, the CPU executes the same operations as those for the above-mentioned left mirror concerning the straight-moving screw motor M₁, γ-axis motor M₄, δ-axis motor M₅, α-axis motor M₂, β-axis motor M₃, drive circuits 101, 104, 105, 102, 103, expansion position limit switch SW_{1B}, nighttime illumination lamps L_{RF}, L_{RR}, and turn-on circuit 111 in response to the operations of the switches SW_{U}, SW_{D}, SW_{R}, and SW_{L} of the mirror controller 30.
(2) When either the right or left mirror is in a state of expanded visual field, the CPU causes, through the right and left straight-moving screw drive circuits 101, the straight-moving screw motors M₁ and M₆ to be driven in the returning direction for a predetermined period of time (e.g., five seconds) and causes, through the drive circuits 102, 107, 103, 108, 104, 109, 105, 110, the right and left α-axis, β-axis, γ-axis and δ-axis motors M₂, M₇, M₃, M₈, M₄, M₉, M₅ and M₁₀ to be rotated up to the rotational angles (pulse counts) that have been stored as return positions set by the driver (return to the ordinary driving condition) (1) when there is no signal from the speed sensor SSR_{V} for a preset period of time (e.g., one minute), the reverse gear switch SW_{RV} of the vehicle has not been set to the reverse state, and none of the direction adjustment switches SW_{U}, SW_{D}, SW_{R}, and SW_{L} of the mirror controller 30 are depressed, (2) when the vehicle speed has exceeded a preset forward speed (the reverse gear switch SW_{RV} of the vehicle is not in the reverse state, and the speed sensor SSR_{V} is detecting a speed of, for example, 10 Km/h), or (3) when the IG key switch SW_{IG} is opened from the closed state. Under the ordinary driving condition, therefore, the state of expanded visual field of the mirror is not established to maintain safe driving.

### [4] Setting and calling the memory.

(1) With the IG key switch SW_{IG} being turned on, when any one of the memory switches SW_{MA}, SW_{MB}, SW_{MC}, and SW_{MD} is depressed within a predetermined period time (e.g., within 10 seconds) after the memory switch SW_{MW} has been depressed, the CPU stores the expanded/returned state of the right and left mirror slide plates 8R, 8L at that moment and rotational angles (pulse counts) of the right and left α-axis, β-axis, γ-axis and δ-axis motors M₂, M₇, M₃, M₈, M₄, M₉, M₅ and M₁₀ together with the memory switches (memory operation).
(2) With the IG key switch SW_{IG} being turned on, when any one of the memory switches SW_{MA}, SW_{MB}, SW_{MC}, and SW_{MD} is depressed, the CPU stores the expanded/returned state of the right and left mirror slide plates 8R, 8L at that moment and rotational angles (pulse counts) of the right and left α-axis, β-axis, γ-axis and δ-axis motors M₂, M₇, M₃, M₈, M₄, M₉, M₅ and M₁₀ as return positions set by the driver, turns on the indicator LED that forms a pair with a memory switch that is depressed, causes, through the straight-moving screw drive circuit 101, the straight-moving screw motors M₁ and M₆ to be rotated in order to reproduce the expanded/returned state of the right and left mirror slide plates 8R and 8L that are stored in the memory together with the switches, and causes, through the drive circuits 102, 107, 103, 108, 104, 109, 105, 110, the motors M₂, M₇, M₃, M₈, M₄, M₉, M₅ and M₁₀ in order to reproduce the rotational angles (pulse counts) of the right and left α-axis, β-axis, γ-axis and δ-axis (operation for calling memory)
(3) When a memory switch forming a pair with an indicator LED that is turned on is depressed in a state where the memory is called, the CPU causes, through the straight-moving screw drive circuit 101, the straight-moving screw motors M₁ and M₆ to rotate in order to reproduce the expanded/returned state of the right and left mirror slide plates 8R and 8L that are stored as return positions set by the driver at a moment when the operation is assumed for calling the memory, and further causes, through the drive circuits 102, 107, 103, 108, 104, 109, 105, 110, the motors M₂, M₇, M₃, M₈, M₄, M₉, M₅ and M₁₀ in order to reproduce the rotational angles (pulse counts) of the right and left α-axis, β-axis, γ-axis and δ-axis (operation for resetting the memory). When either the right mirror or the left mirror is in a state of expanded visual field as a result of calling memory, the CPU resets the memory depending upon any one of the return conditions (1), (2) and (3) into the ordinary driving condition mentioned in [3]-(2) above.
(4) When the memory switches SW_{MA}, SW_{MB}, SW_{MC}, and SW_{MD} are in an initial state (as when a new car is bought), the CPU is storing in advance the rotational angles (pulse counts) of the α-axis, β-axis, γ-axis and δ-axis of the right and left mirrors such that the positions that are mostly desired to be seen are reflected on the mirrors (e.g., the memory switches SW_{MA}, SW_{MB}, SW_{MC}, and SW_{MD} have been so adjusted and stored in the CPU that the areas where the front left wheel and front right wheeel, front left wheel and rear right wheel, rear left wheel and rear right wheel, and rear left wheel and front right touching the ground, can be seen on the right and left mirrors). Accordingly, the areas that are mostly desired to be seen can be easily viewed without the need to dare to set the positions.

### 5. Electrically powered folding.

Though not shown in Fig. 10, the mirror can be electrically folded by providing the folding mechanism of the base plate 2 with an electric motor and by providing a switch inside the room.

The embodiment of the present invention makes it possible to accomplish all of the above-mentioned objects.

That is, there is provided a door mirror with a small dead angle with which a driver manipulates indoor switches as required to automatically move the mirror surface of the door mirror of one side or both sides up to a predetermined angular position, so that the areas which are usually within dead angles are temporarily brought into view and then the mirror surface is returned back to the initial state. Moreover, the door mirror makes it easier to pass another car ahead particularly when driving a car with the left-sided steering wheel (many imported cars), f.i. in U.K. or in Japan where the traffic rule is that keep to the left when you drive. Furthermore, the door mirror with a small dead angle of the present invention makes it possible to easily and finely adjust the position and angle of the mirror surface depending upon a change in the position of the eyes of when the car is used by a different driver. The door mirror is confined within the amount of protrusion beyond the car body of a conventional door mirror, and can be expanded and stored as required.

Besides, the door mirror of the present invention is equipped with movable sources of light that move together with the mirror surface and illuminate the areas that are so far within dead angles without causing dazzle to the driver. Therefore, the driver is allowed to confirm the conditions even in the darkness.

## Claims

1. A door mirror with a small dead angle having a base plate (2) that also serves as a portion for being mounted on a door characterized by a support arm (4) pivotally attached to the base plate and being allowed to be tilted, a straight-moving drive inserted in the support arm (4), a slide plate (8) that pivotally engages with the straight-moving drive (5) and slides in the lengthwise direction of the support arm (4) along a guide (6), and a mirror case (10) that is pivotally attached to the slide plate (8) in a manner to be turned.

2. A door mirror with a small dead angle according to claim 1, wherein the mirror case (10) and/or the support arm (4) is provided with one or more movable sources (L) of light that are not dazzling to the driver.

3. A door mirror with a small dead angle which can be folded according to claim 1 or 2, wherein the base plate (2) comprises a base plate and an auxiliary base plate which is pivotally attached to the door intimately and in a folding manner, and the support arm (4) is pivotally attached to the auxiliary base plate.

4. A door mirror with a small dead angle according to any one of claims 1 to 3, wherein the mirror case (10) is a rearview mirror case containing a mechanism for finely adjusting a mirror surface (3) longitudinally and transversely.

5. A door mirror with a small dead angle according to any one of claims 1 to 4, wherein a CPU stores in advance the coordinates (X, α, β) of the mirror case (10) to reproduce mirror surface positions (P₁, P₂, P₃, ---) at which visual fields (S₁, S₂, S₃, ---) that cannot be seen at an ordinary mirror surface position due to dead angles, can be seen by a driver on the driver's seat, the mirror case (10) automatically moves up to said coordinates enabling the field to be seen when the driver depresses buttons carrying indications of desired visual fields (S₁, S₂, S₃, ---).

6. A door mirror with a small dead angle according to any one of claims 1 to 5, characterized by a control function which causes the mirror surface to return back to the initial position set by the driver when the driver manipulates switches, when a predetermined period of time passes, when a car reaches a predetermined forwardly travelling speed, or when an ignition key is turned off.

7. A door mirror with a small dead angle according to any one of claims 1 to 6, characterized in that the straight-moving drive (5) is formed by a screw-drive.

## Patentansprüche

1. Türspiegel mit einem kleinen toten Winkel, aufweisend eine Basisplatte (2), die auch als Teil zum Montieren an einer Tür dient,
gekennzeichnet durch
- einen Tragarm (4), der schwenkbar an der Basisplatte befestigt ist und gekippt werden kann,
- einen geradebeweglichen Antrieb, der in den Tragarm (4) eingesetzt ist,
- eine Schiebeplatte (8), die schwenkbar mit dem geradebeweglichen Antrieb (5) in Eingriff ist und in Längsrichtung des Tragarms (4) entlang einer Führung (6) gleitet, und
- ein Spiegelgehäuse (10), das an der Schiebeplatte (8) in einer Weise schwenkbar befestigt ist, daß es drehbar ist.

2. Türspiegel mit einem kleinen toten Winkel gemäß Anspruch 1, wobei das Spiegelgehäuse (10) und/oder der Tragarm (4) mit einer oder mehreren beweglichen Lichtquellen (L) versehen sind, die den Fahrer nicht blenden.

3. Einklappbarer Türspiegel mit einem kleinen toten Winkel gemäß Anspruch 1 oder 2, wobei die Basisplatte (2) eine Grundplatte und eine Hilfsgrundplatte umfaßt, die eng und einklappbar sowie schwenkbar an der Tür befestigt ist, und der Tragarm (4) schwenkbar an der Hilfsgrundplatte befestigt ist.

4. Türspiegel mit einem kleinen toten Winkel gemäß einem der Ansprüche 1 bis 3, wobei das Spiegelgehäuse (10) ein Rückspiegelgehäuse ist, das einen Mechanismus zur Feineinstellung einer Spiegelfläche (3) in Längs- und Querrichtung enthält.

5. Türspiegel mit einem kleinen toten Winkel gemäß einem der Ansprüche 1 bis 4, wobei eine CPU im Voraus die Koordinaten (X, α, β) des Spiegelgehäuses (10) speichert, um Spiegelflächenstellungen (P₁, P₂, P₃, ...) wiederzugeben, mit denen Sichtfelder (S₁, S₂, S₃, ...), die wegen toter Winkel bei einer normalen Spiegelflächenstellung nicht eingesehen werden können, von einem Fahrer auf dem Fahrersitz eingesehen werden können, wobei sich das Spiegelgehäuse (10) automatisch zu den Koordinaten bewegt, die das Einsehen des Feldes ermöglichen, wenn der Fahrer Knöpfe mit Angaben zu gewünschten Sichtfeldern (S₁, S₂, S₃, ...) drückt.

6. Türspiegel mit einem kleinen toten Winkel gemäß einem der Ansprüche 1 bis 5, gekennzeichnet durch eine Steuerfunktion, die die Spiegelfläche veranlaßt, in die vom Fahrer eingestellte Ausgangsposition zurückzukehren, wenn der Fahrer Schalter betätigt, wenn eine vorbestimmte Zeitspanne verstreicht, wenn ein Wagen eine vorbestimmte Vorwärts-Fahrgeschwindigkeit erreicht oder wenn ein Zündschlüssel abgestellt wird.

7. Türspiegel mit einem kleinen toten Winkel gemäß einem der Ansprüche 1 bis 6, dadurch gekennzeichnet, daß der geradebewegliche Antrieb (5) durch eine Verstellspindel gebildet ist.

## Revendications

1. Miroir de porte à petit angle mort, possédant une plaque de base (2) qui est aussi utilisée comme partie destinée à être montée sur une porte, caractérisé par un bras de support (4) fixé de manière pivotante à la plaque de base et destiné à basculer, un dispositif d'entraînement à déplacement rectiligne inséré dans le bras de support (4), une plaque coulissante (8) qui coopère de manière pivotante avec l'organe (5) d'entraînement à déplacement rectiligne et qui coulisse dans la direction longitudinale du bras de support (4) le long d'un guide (6), et un boîtier (10) de miroir qui est fixé de manière pivotante à la plaque coulissante (8) de manière qu'il tourne.

2. Miroir de porte à petit angle mort selon la revendication 1, dans lequel le boîtier (10) du miroir et/ou le bras de support (4) a une ou plusieurs sources mobiles (L) de lumière qui n'éblouissent pas le conducteur.

3. Miroir de porte à petit angle mort qui peut être plié selon la revendication 1 ou 2, dans lequel la plaque de base (2) comporte une plaque de base et une plaque de base auxiliaire qui est fixée de manière pivotante à la porte de manière intime et afin qu'elle puisse être pliée, et le bras de support (4) est fixé de manière pivotante à la plaque de base auxiliaire.

4. Miroir de porte à petit angle mort selon l'une des revendications 1 à 3, dans lequel le boîtier (10) de miroir est un boîtier de rétroviseur contenant un mécanisme d'ajustement fin d'une surface (3) de miroir en directions longitudinale et transversale.

5. Miroir de porte à petit angle mort selon l'une quelconque des revendications 1 à 4, dans lequel une unité centrale de traitement CPU mémorise au préalable les coordonnées (X, α, β) du boîtier (10) de miroir pour reproduire des positions (P₁, P₂, P₃,...) de surface de miroir pour lesquelles des champs de vision (S₁, S₂, S₃,...), qui ne peuvent pas être vus pour une position ordinaire d'une surface de miroir à cause des angles morts, peuvent être observés par un conducteur assis sur un siège de conducteur, et le boîtier (10) du miroir se déplace automatiquement aux coordonnées permettant l'observation du champ de vision lorsque le conducteur enfonce des boutons portant des indications de champ de vision voulu (S₁, S₂, S₃,...).

6. Miroir de porte à petit angle mort selon l'une quelconque des revendications 1 à 5, caractérisé par une fonction de commande qui provoque un retour de la surface du miroir à la position initiale déterminée par le conducteur lorsque le conducteur manipule des interrupteurs, lorsqu'une période prédéterminée s'est écoulée, lorsqu'une automobile atteint une vitesse prédéterminée d'avance, ou lorsqu'une clé d'allumage est mise en position d'arrêt.

7. Miroir de porte à petit angle mort selon l'une quelconque des revendications 1 à 6, caractérisé en ce que le dispositif (5) d'entraînement à déplacement rectiligne est formé par un dispositif à vis d'entraînement.
